# EUROPÄISCHE PATENTSCHRIFT

(11) **EP 3 577 174 B1**
(45) Veröffentlichungstag und Bekanntmachung des Hinweises auf die Patenterteilung: **09.12.2020**
(21) Anmeldenummer: 18707842.3
(22) Anmeldetag: 01.02.2018
(51) Int. Cl.: C09D 11/037, C09D 11/10, C09C 1/24

(54) **DRUCKFARBE**
PRINTING INK
ENCRE D'IMPRESSION

(30) Priorität: 02.02.2017 AT 500802017
(43) Veröffentlichungstag der Anmeldung: 11.12.2019
(73) Patentinhaber: Constantia Teich GmbH, 3205 Weinburg (AT)
(72) Erfinder: VEIT, Werner, 3506 Brunnkirchen (AT); WURMB, Anna, 3200 Obergrafendorf (AT)
(74) Vertreter: Patentanwälte Barger, Piso & Partner
(86) Internationale Anmeldenummer: PCT/AT2018/060030
(87) Internationale Veröffentlichungsnummer: WO 2018/140996

(56) Entgegenhaltungen:
- EP-A1- 2 439 245
- US-A- 5 133 805

## Beschreibung

Die Erfindung betrifft eine Druckfarbe, die tauglich für direkten Kontakt mit Lebensmitteln ist, insbesondere für Aluminiumfolien und für Folien aus Kunststoff und/oder Papier mit metallisierter Oberfläche, entsprechend dem Oberbegriff des Anspruches 1.

Aus der EP 306 224 ist es bekannt, Eisenoxidpigment in Form flächiger, im Wesentlichen kreisförmiger Hämatitteilchen (Fe₂O₃) mit einem durchschnittlichen Durchmesser von 0,5 bis 5,0 µm, einer Dicke von 5 nm bis 50 nm (0,005 bis 0,05 µm) und einem Verhältnis Durchmesser-Dicke von 50:1 bis 500:1 zu verwenden, was, gemeinsam mit weiteren spezifizierten Eigenschaften, einen goldfarbenen Lack ergibt.

Aus der DE 10 2012 103 825 A1 ist es bekannt, einen Offsetdrucklack zu verwenden, bei dem alle Bestandteile entweder Lebensmittel oder Lebensmitteizusatzstoffe sind. Dabei werden alle nur denkbaren Materialien kursorisch aufgezählt, darunter auch Eisenoxide.

Aus der WO2010/O0G2059 A1 und der EP 401 000 A2 sind Verfahren zur Herstellung von Hämatitplättchen bekannt.

Aus der WO2006/000009 A2 sind Hämatitplättchen an sich und auch ihre Verwendung in Lacken bekannt.

In so gut wie allen Ländern der Welt bestehen äußerst rigorose Vorschriften für alle Arten von Gegenständen, die bestimmungsgemäß mit Lebensmitteln in direkten Kontakt kommen. Die Formulierung der Vorschriften ist natürlich stark unterschiedlich, der Sinn aber stets der Gleiche: es muss sichergestellt sein, dass alle derartigen Gegenstände beim direkten Kontakt mit Lebensmitteln keinerlei Veränderungen an diesen Lebensmittel bewirken. Wenn es technisch unumgänglich ist, so muss sichergestelit sein, dass eine eventuelle Wirkung unbedenklich ist.

Dies hat dazu geführt, dass für die eingangs genannten Druckfarben üblicherweise Farbstoffe pflanzlichen Ursprungs verwendet werden, wie beispielsweise Betanin oder Chlorophyll oder synthetische Nachbildungen derartiger natürlicher Substanzen wie Riboflavin-5-Phosphat für gelbe Farbe oder Kurkumin für orange-gelbe Farbe.

Es gibt, wie oben erwähnt, auch Farbstoffe, die als Lebensmittelzusatzstoffe zugelassen sind (in Europa mit einer "E-Nummer" versehen), doch diese sind deshalb nachteilig, weil sie praktisch unvermeidlich das Lebensmittel anfärben, was natürlich nicht gewünscht ist.

Es gibt auch anorganische Farbstoffe, die für direkten Kontakt mit Lebensmitteln geeignet sind, beispielsweise Eisenoxide oder Eisenhydroxide, doch weisen diese den unerwünschten Nebeneffekt auf, dass sie deckend sind und somit den wegen des optischen Effektes erwünschten metallischen Eindruck bei der Verwendung auf Aluminiumfblien oder metallisierten Kunststoffolien oder metallisierten Papieren diesen metallischen Effekt optisch abdecken.

Derartige Farbstoffe können daher problemlos für die Innenseiten von Kapseln, in denen sich beispielsweise Kaffeepulver, Zucker, Kaffeeobers, etc. befinden, verwendet werden, aber für die Außenseite derartiger Kapseln bei denen die optische Anmutung wesentlich ist, ist es wegen des Brühvorganges oder Entnahmevorganges oder allgemein der bestimmungsgemäßen Verwendung notwendig, dass auch diese wegen des wenn auch nur kurzzeitigen Kontaktes mit dem Lebensmittel vollständig lebensmitteltauglich ist.

Es besteht somit ein Bedarf an Druckfarben, die für den direkten Lebensmittelkontakt geeignet sind und die, auf metallische bzw. metallisierte Oberflächen aufgebracht, den metallischen Effekt nicht abdecken.

Es ist Ziel und Aufgabe der Erfindung, solche Druckfarben anzugeben.

Erfindungsgemäß werden diese Ziele durch Druckfarben erreicht, die die im kennzeichnenden Teil des Anspruches 1 angegebenen Merkmale aufweisen; mit anderen Worten es werden flächige bis stäbchenförmige (oder auch nadelförmige) Pigmente auf der Basis von bzw. bestehend aus Eisenoxid-/Eisenhydroxid (Fe₂O₃, in den verschiedensten Ausbildungen inkl. FeO₃(OH)₃) mit Pigmentgrößen im Nanometerbereich in Kombination mit transparenten, lebensmitteltechnisch geeigneten Bindemitteln wie Nitrocellulose, Polyester, Polyvinylbutural. Polyurethan, mit natürlichen Bindemitteln wie Schellack oder Xanthanbasis oder mit Acrylaten oder Polyvinylchlorid eingesetzt. Dies ergibt überraschenderweise trotz der chemischen Natur der Pigmente eine transparente Farbe, und wird daher im Folgenden als transparentes Eisenoxidpigment bezeichnet. Sie belässt auf Aluminiumobertlächen oder metallisierten Kimststoffoberflächen den metallischen Effekt, ja verstärkt ihn sogar und ist völlig unbedenklich im direkten Kontakt mit Lebensmitteln. Auch ist dies ein völlig unerwarteter Effekt, wenn man die zwingende Goldfärbung bei den nur knapp neben den erfindungsgemäßen Werten liegenden, etwa kreisförmigen Pigmenten der EP 306 224 bedenkt.

Eine mögliche Ursache für diesen nicht völlig erforschten Effekt könnte es sein, dass diese Pigmente sich in Form von Doppelketten anordnen, zwischen denen tunnelartige Hohlräume entstehen, wobei die Gesamtsiruktur entsprechend unerwartete Wirkung auf das einfaliende-reflektierte Licht hat.

Die Erfindung wird im Folgenden anhand von Beispielen näher erläutert.

Es wurden flächige bis stäbchenförmige Eisenoxidpigmente mit Abmessungen von 0,08 µm zu 0,75 µm (jeweils ± 5 %) und einer Dicke von etwa 0,05 µm (etwa steht in der Beschreibung und den Ansprüchen für ± 10 %) verwendet, wobei einige wenige Prozent der Anzahl der Pigmente, aber unter 5 %, Ausreißer sein können. Flächig deshalb, weil doch zwischen "Breite" und "Dicke" gut unterschieden werden kann, stäbchenförmig deshalb, weil doch eine Abmessung bei weitern überwiegt. Diese Pigmente werden mit Lackfimissen gemischt wie z. B. Nitrocellulose, Polyester, Polyvinylbutural, Polyurethan, mit natürlichen Bindemitteln wie Schellack oder Xanthanbasis oder mit Acrylaten oder Polyvinylchlorid und direkt auf Aluminiumfolie aufgetragen. Die so bedruckte Aluminiumfolie wurde für Kaffeeverpackungen, Molkereierzeugnisse und, in passender Stärke, für Kaffeekapseln verwendet und getestet.

Die Pigment-Präparation enthält bevorzugt 3-40 Gew.-% transparentes Eisenoxidpigment und besteht besonders bevorzugt aus 5-30 Gew.-% transparentem Eisenoxidpigment, 65-85 Gew.-% Weichmacher auf Polyesterbasis wie z.B. Rokralux 145 von Robert Krämer oder Rokralux VP 5797 oder Ricinusöl, die für direkten Lebensmittelkontakt geeignet sind und 5-10 Gew.-% hochmolekularem Polymer wie z.B. Tego Dispers 650 oder Tego Dispers 653 als Dispergieradditiv, dieses ist ebenfalls für direkten Lebensmittelkontakt brauchbar.

Diese Pigment-Präparation wurde zur Herstellung des fertigen Lackes verwendet, wobei 5-25 Gew.-% Pigment-Präparation und 15-20 Gew.-% Nitrocellulose, Polyesterharze, Polyurethane, Acrylate oder Melaminharze mit 60-75 Gew.-% Lösungsmittel, vorzugsweise Alkohole, Ethylester, Ketone, gemischt werden.

Das Überraschende ist, dass durch die Verwendung derart kleinformatiger Eisenoxidpartikel in der angegebenen Konzentration der fertige Lack transparent ist, da auffallendes Licht bis zur Aluminiumoberfläche gelangt und dort reflektiert wird. Damit kommt es zum gewünschten. Aussehen bei vollständiger Lebensmitteltauglichkeit.

Die Herstellung der transparenten Eisenoxid-Pigmetpräparation erfolgt in einem speziellen Dispergierverfahren mit einer Perlmühle. In einen konischen Arbeitsbehälter (Stator) taucht ein ebenfalls konischer Mitnahmekörper (Rotor) ein. In dem Spalt, der von. diesen beiden Körpern gebildet wird und dessen. Breite etwa 6,5 bis 13 mm beträgt, werden die Mahlkugeln durch die Rotation des Rotors von innen nach außen radial bewegt. In der gleichen Richtung nimmt auch die Bewegungsenergie der Mahikugeln zu. Eine Trennvorrichtung hält die Mahlkugeln in der Mühle und führt sie über einen Kanal zum Eingang des Mahlraumes zurück. Die Geometrie des Mahlraumes stellt sicher, dass sich eine gleichmäßige und enge Kornverteilung im Mahlgut ergibt.

Die Zuführung der Suspension erfolgt mittels externer Pumpe mit verstellbarer Förderleistung. Die Drehzahl des Rotors, die Breite des Mahlspaltes, der Füllgrad an Kugeln, das Produkt und der Durchmesser der Mahikugeln sowie die Durchflussgeschwindigkeit der Suspension beeinflussen das Mahlergebnis. Jeder dieser Parameter kann frei gewählt werden. So lässt sich für die Herstellung einer transparente Eisenoxid-Pigmentpräparation die optimalen Bedingungen einstellen. Als Pigment werden Eisenoxidpigmente vorzugsweise Bayferrox 686^{R} der Fa. Lanxess verwendet mit einem Eisenoxidgehalt von 96,9% gernessen nach DIN 55913-2:1972 und einer max. Feuchtigkeit > 2,5% gernessen nach DIN EN ISO 787-2:1995. Als vorherrschende Teilchengröße hat sich 0,1-0,6µm oder 100-600nm zur Erzielung des Transparenzeffektes herausgestellt. Die Ölzahl gernessen in g/100g nach DIN EN ISO 787-5:1995 sollte 22 g/100g nicht übersteigen und sollte so im Bereich 19-22 g/100g liegen. Die Stampfdichte sollte vorzugsweise 0,8-1,2 g/ml gemessen nach DIN EN ISO 787-10:1995 betragen.

Die Herstellung des Lackes erfolgte in einem speziellen Dispergierer T 25 Digital Ultra Turrax. Der IKA Dispergierer arbeitet nach dem Rotor-Stator-Prinzip. Das System besteht aus einem Rotor in einem feststehenden Stator. Der Durchmesser des Rotors beträgt 12,7mm und des Stators 18mm. Die Spaltbreite zwischen Stator und Rotor soll vorzugsweise 0,3mm oder 300µm betragen. Die Lackkomponeuten werden in folgender Reihenfolge und mit einer Umdrehungsgeschwindigkeit von 10.000 ^{min-1} im Dispergierer auf eine Feinheit von < 1µm dispergiert. Zuerst wird Bindemittel A und Bindemittel B vorgelegt und die Pigmentpräparation und der Weichmacher zugegeben. Der Dispergierprozess wird solange fortgesetzt bis die Feinheit des Lackes gernessen mit einem Grindometer < 1µm beträgt.

Aufgetragen werden die so hergestellten Lacke bevorzugt auf Druckmaschinen im Flexo- oder Tiefdruck, auch die Aufbringung im Glattwaizenauftragsverfahren mittels Lackiermaschinen ist möglich, auch Rasterwalzen oder das Curtain Coating Verfahren können problemlos angewandt werden. Die Nassschichtdicke der so aufgebrachten Beschichtung kann in weiten Grenzen variieren und liegt zumeist zwischen 0,1 - 10 µm, ohne darauf beschränkt zu sein.

Die für derartige Substanzen vorgesehenen Tests und Prüfungen betreffend Haftung, Kochwasserbestandigkeit, Kaltwasserbeständigkeit, Fettbeständigkeit, Hitzepressfestigkeit. und Ausblutbeständigkeit in das Lebensmittel, wurden positiv absolviert.

Die erfindungsgemäß ausgebildete Platine oder das erfindungsgemäß ausgebildete Abdeckband wird z.B. auf eine Kafteekapsel aufgesiegelt, wobei übliche Heißsiegellacke verwendet werden. Die erfindungsgemäße Beschichtung ist auf der Außenseite der Verpackung und hat vorerst keinen Kontakt mit dem Lebensmittel. Erst bei Verwendung der Kapsel wird heißes Wasser von hinten oder unten in die Kapsel geleitet und der fertige Kaffee fließt über die Platine (welche mit diesem Lack beschichtet ist) in die Kaffeetasse.

Ähnliche Anwendungsgebiete gibt es bei Verpackungen mit Mikrowellentauglichkeit, beim Einbringen von Geschmäckern in Getränke, einschließlich Bier, und ähnliches mehr.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl derartiger Bestandteile, der Begriff: "enthaltend" steht auch für "bestehend aus".

## Patentansprüche

1. Druckfarbe für direkten Lebensmittelkontakt, insbesondere zur Aufbringung auf metallische oder metallisierte Oberflächen und insbesondere für Verpackungsmaterialien von Lebensmitteln, aufweisend einen Lackfirnis und eine Pigment-präparation, wobei 5-20 Gew.-% Pigmentpräparation enthaltend Eisenoxidpigmente und 80-95 Gew.-% Lackfirnis vorliegen, **dadurch gekennzeichnet, dass** die Eisenoxidpigmente flächig bis stäbchenförmig mit Abmessungen von 0,08 µm zu 0,75 µm, beide Werte jeweils ± 5 %, und einer Dicke von 0,05 µm, ± 10 %, sind, wobei unter 5 % der Pigmente größer als angegeben sind.

2. Druckfarbe nach Anspruch 1 oder 2, **dadurch gekennzeichnet, dass** die Pigment-präparation 3-40 Gew.-% Eisenoxidpigment enthält.

3. Druckfarbe nach Anspruch 1 oder 2, **dadurch gekennzeichnet, dass** der Lackfirnis, bezogen auf die Gesamtmasse, zu 15-20 Gew.-% aus Nitrocellulose und/oder Polyesterharzen und/oder Polyurethanen und/oder Acrylaten und/oder Melaminharzen und zu 60-75 Gew.-% aus Lösungsmittel, vorzugsweise Alkohole und/oder Ethylester und/oder Ketonen, besteht.

4. Druckfarbe nach einem der Ansprüche 1 bis 3, **dadurch gekennzeichnet, dass** die Pigmentpräparation aus 3-40 Gew.-%, bevorzugt 5-30 Gew.-% Eisenoxidpigment, 65-85 Gew.-% Weichmacher auf Polyesterbasis oder Ricinusölbasis, die für direkten Lebensmittelkontakt geeignet sind, und 5-10 Gew.-% hochmolekularem Polymer als Dispergieradditiv, besteht.

## Claims

1. Printing ink for direct food contact, in particular for application on metallic or metallised surfaces and in particular for packaging materials for food, having a varnish and a pigment preparation, wherein 5-20% by weight of pigment preparation containing iron oxide pigments and 80-95% by weight of varnish are present, **characterised in that** the iron oxide pigments are flat to rod-shaped with dimensions of from 0.08µm to 0.75µm, both values ± 5% respectively, and a thickness of 0.05µm, ± 10%, wherein less than 5% of the pigments are larger than specified.

2. Printing ink according to claim 1 or 2, **characterised in that** the pigment preparation contains 3-40% by weight of iron oxide pigment.

3. Printing ink according to claim 1 or 2, **characterised in that** the varnish, with regard to the total weight, consists of 15-20% by weight of nitrocellulose and/or polyester resins and/or polyurethanes and/or acrylates and/or melamine resins and 60-75% by weight of solvent, preferably alcohols and/or ethyl esters and/or ketones.

4. Printing ink according to one of claims 1 to 3, **characterised in that** the pigment preparation consists of 3-40% by weight, preferably 5-30% by weight, of iron oxide pigment, 65-85% by weight of polyester-based or castor oil-based plasticisers, which are suitable for direct food contact, and 5-10% by weight of high molecular weight polymer as a dispersing additive.

## Revendications

1. Encre d'imprimerie pour contact alimentaire direct, en particulier pour application sur des surfaces métalliques ou métallisées et en particulier pour des matériaux d'emballage de produits alimentaires, comportant un vernis et une préparation pigmentaire, encre d'imprimerie contenant 5 à 20 % en poids d'une préparation pigmentaire contenant des pigments d'oxyde de fer et 80 à 95 % en poids d'un vernis, **caractérisée en ce que** les pigments d'oxyde de fer ont une forme allant d'une forme plate à une forme en bâtonnets, ayant des dimensions 0,08 µm à 0,75 µm, ± 5 % pour chacune des deux valeurs, et une épaisseur de 0,05 µm ± 10 %, moins de 5 % des pigments étant plus gros que ce qui est indiqué.

2. Encre d'imprimerie selon la revendication 1 ou 2, **caractérisée en ce que** la préparation pigmentaire contient 3 à 40 % en poids d'un pigment d'oxyde de fer.

3. Encre d'imprimerie selon la revendication 1 ou 2, **caractérisée en ce que** le vernis est constitué, par rapport à la masse totale, de 15 à 20 % en poids de nitrocellulose et/ou de résines de polyester et/ou de polyuréthannes et/ou d'acrylates et/ou de résines de mélamine, et de 60 à 75 % en poids d'un solvant, de préférence des alcools et/ou des esters éthyliques et/ou des cétones.

4. Encre d'imprimerie selon l'une des revendications 1 à 3, **caractérisée en ce que** la préparation pigmentaire est constituée de 3 à 40 % en poids, de préférence de 5 à 30 % en poids d'un pigment d'oxyde de fer, de 65 à 85 % en poids de plastifiants à base de polyester ou à base d'huile de ricin, qui conviennent à un contact alimentaire direct, et de 5 à 10 % en poids d'un polymère à grande masse moléculaire servant d'additif dispersant.
